# EUROPEAN PATENT SPECIFICATION

(11) **EP 2 770 128 B1**
(45) Date of publication and mention of the grant of the patent: **29.11.2017**
(21) Application number: 13196797.8
(22) Date of filing: 12.12.2013
(51) Int. Cl.: E03D 11/16, A47K 3/16, E04F 13/08, F16B 5/02

(54) **ANGLED PIECE FOR FIXING TOILETS**
Abgewinkeltes Stück zum Befestigen von Toiletten
Pièce angulaire permettant de fixer des toilettes

(30) Priority: 21.02.2013 ES 201330209 U
(43) Date of publication of application: 27.08.2014
(73) Proprietor: Apolo Fijaciones y Herramientas, S.L., 08211 Castellar del Valles (ES)
(72) Inventor: CERAVALLS PUJOL, Ramon, 08211 CASTELLAR DEL VALLES (ES); LOPEZ PUCHE, Núria, 08211 CASTELLAR DEL VALLES (ES)
(74) Representative: Oficina Ponti, SLP

(56) References cited:
- EP-A2- 0 504 587
- EP-A2- 2 036 475
- DE-A1- 3 011 228
- GB-A- 2 435 268

## Description

The present invention relates to an angled piece for fixing toilets which ensures a robust and safe fixation.

### Background of the invention

Known in the art are angled pieces for fixing toilets to the ground, comprising a base for fixing it to the ground and a part for fixing it to the internal surface del toilet, the base comprising at least a hole for the passage of a fixation screw.

An example of these pieces is disclosed in the publication EP 2 036 475, which presents all the features of the preamble of the first claim of the present application.

This type of system, having an angular piece made of plastic with a plurality holes is part of the so-called horizontal fixings. The plurality of holes allows for an easier assembly since it overcomes the problem of alignment of other systems, such as the vertical mounting. The known system based on this angled piece, further comprises a plug made of standard nylon (ø8 or ø10), an hexagonal screw for fixing it to the ground (ø6 or ø7), a protective element for protecting the ceramic wherein a covering is then clipped, a lateral fixation screw (ø5), which is a plastic threaded screw (40 ° thread angle) because it has to create threads in the plastic angled piece and finally a trim.

Fixation with such systems involves the steps of drilling the ground, inserting the plug, screwing in the screw thus mounting the angled piece, positioning the toilet, screwing in the stainless screw with the protector already placed and clipping the trim.

However, this system has the disadvantage that there is a possibility to punch on the hole array in a zone where there is no hole, because there is a big lateral area without hole.

### Description of the invention

To overcome this disadvantage, the present invention proposes a angled piece for fixing toilets to the ground, comprising a base for fixing it to the ground and a part for fixing it to the internal surface of the toilet base, the base comprising at least a hole for the passage of a fixation screw, which is characterised in that the fixing surface of the part for fixing it to the toilet comprises a plurality of cavities with decreasing cross-section arranged in columns, the edges of the adjacent cavities being adjacent.

To avoid the potential problems of crossed thread caused by reduction of a fixing wall a part of blind hole is provided to increase the attachment area.

Preferably, the cavities are blind holes.

Preferably, the cavities are pyramidal or frustoconical.

Preferably, both parts are solid elements that make a single piece.

More preferably, the cavities reach a part of the thickness of the part for fixing to the internal surface of the toilet base.

Preferably, the cavities are arranged in a 4 X 3 matrix.

As an alternative, the cavities are arranged in a 6 X 4 matrix.

Another alternative consists of the cavities being arranged in three columns, a center one provided with three holes and on both sides of the center one two columns with four holes.

### Brief description of the drawings

For a better understanding of what has been outlined some drawings are attached in which, schematically and solely by way of non-limiting example, a practical case of embodiment is described.
Figures 1 and 2 are front elevational views respectively of a piece according to the prior art.

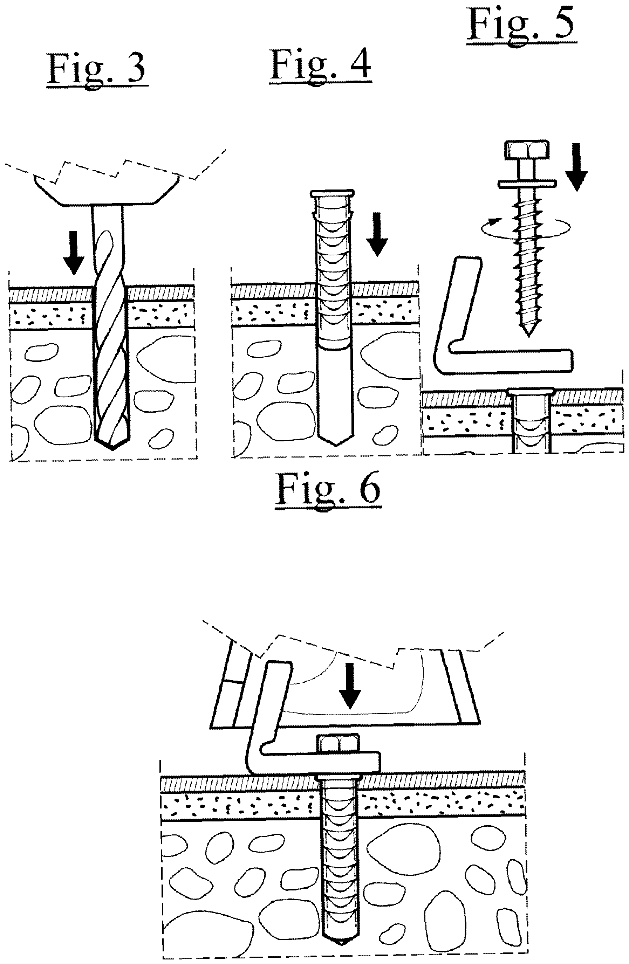

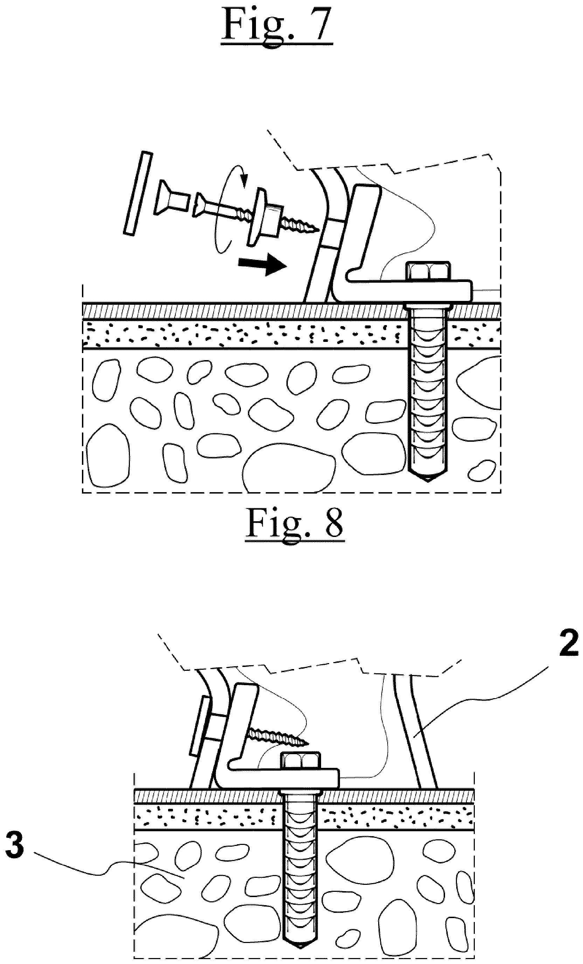

Figures 3-8 illustrate the process of fixing toilets with this type of angled piece.
Figures 9 to 11 are perspective views of three different embodiments of the angled piece that are distinguished by the arrangement of the cavities.
Figure 12 is a rear perspective view showing the blind holes, that is, wherein the cavities do not extend into a through hole.
Figure 13 is a perspective view of an angled piece according to the invention, represented with screws.
Figure 14 is a perspective view of an angled piece according to the invention in a variant in which the cavities are conical.
15 is a perspective in which are represented all assembly components, including the trim.

### Description of a preferred embodiment

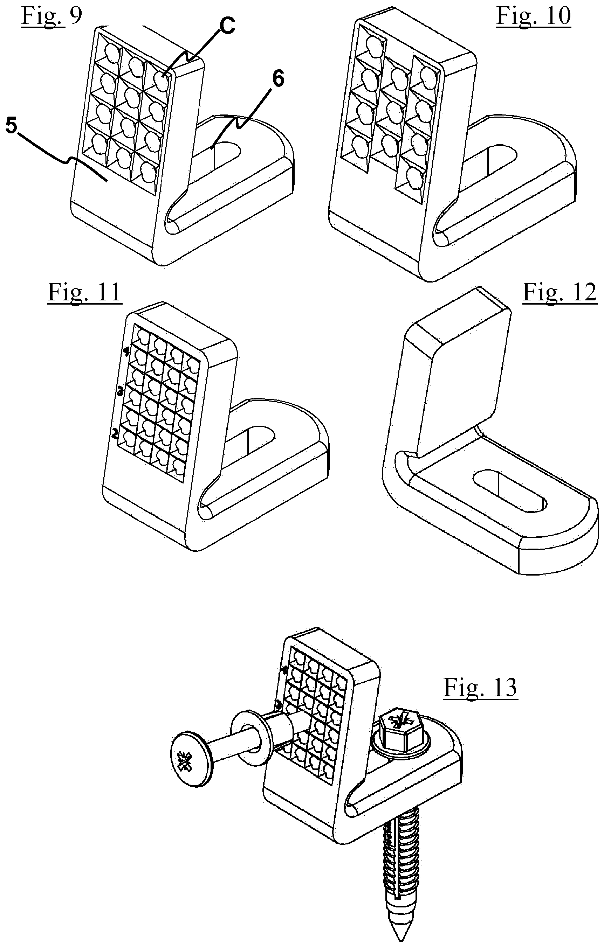

As shown in figures 9 to 12, the invention relates to an angled piece 1 for fixing toilets 2 to the ground 3, comprising a base 4 for fixing to the ground 3 and a part 5 for fixing to the internal surface of the toilet base 2, the base 4 comprising at least a hole 6 for the passage of a fixation screw.

Specifically, according to the invention, the fixing surface of the part 5 for fixing it to the toilet comprises a plurality of cavities that have a portion with a section of pyramidal shape that are arranged in columns, the edges of the adjacent cavities being 6 adjacent.

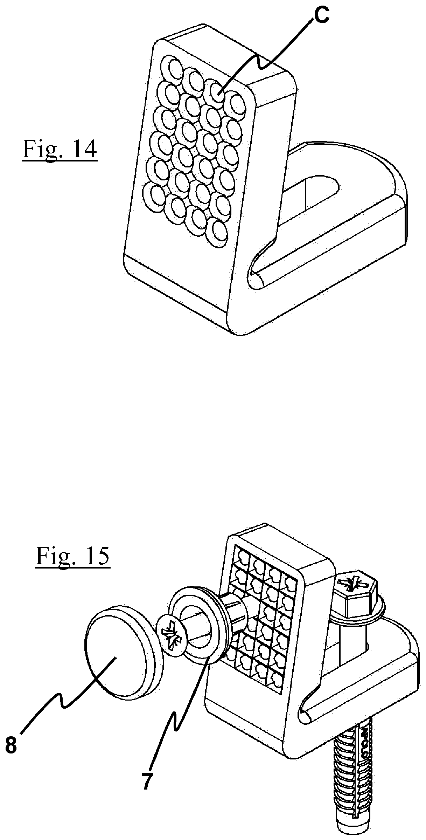

Therefore, the cavities having a truncated pyramidal form, as for example in figure 9, or decreasing conical, like in figure 14, form a guide or chamfered entrance which increases the probability for the screw to hit the hole, which is not possible in the state of the art angled pieces described above, wherein it is necessary to hit the hole, which remains hidden behind the base toilet wall. For this reason it is necessary for the cavities to have a decreasing cross-section in the introduction direction, and that the edges of the adjacent cavities are adjacent, to prevent the end of the screw to hit in a surface that is perpendicular to the introduction direction, in a region having a maximum thickness of the part for fixing it to the toilet.

According to the preferred embodiment, both parts 4, 5 are solid elements that make a single piece 1.

It is preferred that the cavities reach about half the thickness of the part 5 for fixing it to the internal surface of the toilet base 2.

It is also preferred for the hole not to be a through hole, but rather to be blind in a way that the support has a solid part, as shown in figure 12. The lateral screw gets fixed and then, thanks to its tip, it is able to drill the solid part. Thus, a more resistant fixation is obtained.

The cavities can be arranged in a variety of ways, as for example:
- with the cavities arranged in a 4 X 3 matrix, like as shown in figure 9.
- with the cavities arranged in a 6 X 4 matrix, like as shown in figure 11, o.
- with the cavities arranged in three columns, a center one provided with three holes and on both sides of the center one two columns with four holes, like as shown in figure 10.

Moreover, as shown in figure 15, a protector 7 and/or a trim 8 is provided to protect the ceramics and/or hide the head of the screw respectively.

As shown in the figures, the part 5 for fixing to the internal surface of the toilet base 2 forms an angle with the vertical direction comprised between 9° and 11°, preferably of 10°.

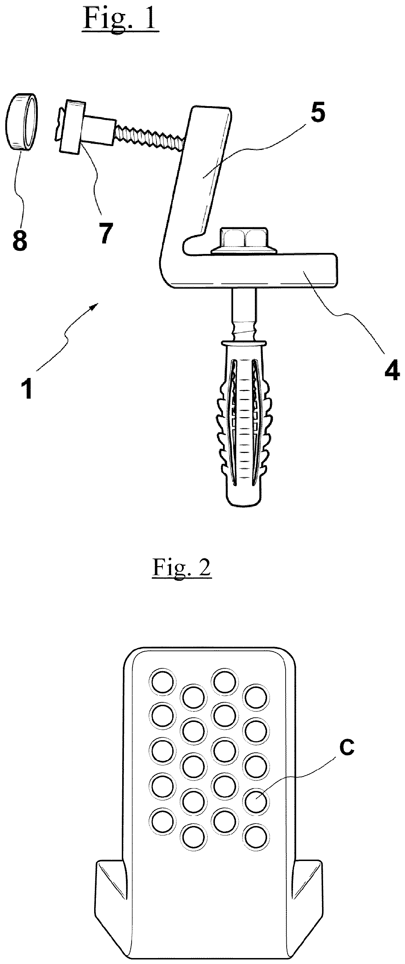

As shown in the figure 1, for example, the joining region between the base 4 for fixing to the ground 3 and the part 5 for fixing to the internal surface of the toilet base 2 is flexible and preferably said joining region is a recess substantially cylindrically shaped in the internal part of the angle.

Although reference has been made to a specific embodiment of the invention, it is apparent to one skilled in the art that the angled piece described is susceptible to numerous variations and modifications, and that all the details mentioned can be substituted by other technically equivalent, without departing from the scope of protection defined by the appended claims.

## Claims

1. Angled piece (1) for fixing toilets (2) to the ground (3), comprising a base (4) for being fixed to the ground (3) and a part (5) for fixing an internal surface of the toilet base (2) to the angled piece (1), the part (5) having a fixing surface which in use contacts the internal surface of the toilet base (2), the base (4) comprising at least a hole (6) for the passage of a fixation screw, and the fixing surface comprising a plurality of cavities (C) arranged in columns, said plurality of cavities (C) being arranged in columns in a side by side manner such that the cavities (C) present a cross-section on the fixing surface with adjacent edges separating the cavities (C) from each other, **characterized in that** the cross-section decreases as the cavities (C) penetrate into the part (5) in the introduction direction of a screw.

2. Angled piece (1) according to claim 1, wherein the cavities (C) are blind holes.

3. Angled piece (1) according to any of the previous claims, wherein the base (4) and the part (5) are solid elements that make a single piece (1).

4. Angled piece (1) according to any of the previous claims, wherein the cavities reach half the thickness of the part (5) for fixing the internal surface of the toilet base (2).

5. Angled piece (1) according to any of the previous claims, wherein the cavities are arranged in a 4 X 3 matrix.

6. Angled piece (1) according to any claims 1 to 4, wherein the cavities are arranged in a 6 X 4 matrix.

7. Angled piece (1) according to any of claims 1 to 4, wherein the cavities are arranged in three columns, a center one provided with three holes and on both sides of the center one two columns with four holes.

8. Angled piece (1) according to any of the previous claims, wherein the part (5) for fixing the internal surface of the toilet base (2) forms an angle with the vertical direction comprised between 9º and 11º.

9. Angled piece (1) according to claim 8, wherein the angle is 10º.

10. Angled piece (1) according to any of the previous claims, wherein a joining region between the base (4) for fixing to the ground (3) and the part (5) for fixing the internal surface of the toilet base (2) is flexible.

11. Angled piece (1) according to claim 10, wherein said joining region is a recess substantially cylindrically shaped.

## Patentansprüche

1. Winkelstück (1) zum Fixieren von Toiletten am Boden (3), das eine Basis (4), die am Boden (3) zu fixieren ist, und ein Teil (5) zum Fixieren einer Innenoberfläche der Toilettenbasis (2) an dem Winkelstück (1) aufweist, wobei das Teil (5) eine Fixieroberfläche aufweist, die bei der Verwendung die Innenoberfläche der Toilettenbasis (2) kontaktiert, wobei die Basis (4) zumindest ein Loch (6) aufweist für den Durchgang einer Fixierschraube, und die Fixieroberfläche eine Mehrzahl von Hohlräumen (C) aufweist, die in Spalten angeordnet sind, wobei die Mehrzahl von Hohlräumen (2) nebeneinander in Spalten angeordnet sind, so dass die Hohlräume (C) auf der Fixieroberfläche einen Querschnitt darstellen mit benachbarten Rändern, die die Hohlräume (V) voneinander trennen, **dadurch gekennzeichnet, dass** sich der Querschnitt verringert, während die Hohlräume (C) in der Einführungsrichtung einer Schraube in das Teil (5) eindringen.

2. Winkelstück (1) gemäß Anspruch 1, bei dem die Hohlräume (C) Blindlöcher sind.

3. Winkelstück (1) gemäß einem der vorhergehenden Ansprüche, bei dem die Basis (4) und das Teil (5) feste Elemente sind, die ein einziges Stück (1) bilden.

4. Winkelstück (1) gemäß einem der vorhergehenden Ansprüche, bei dem die Hohlräume bis zu der Hälfte der Dicke des Teils (5) zum Fixieren der Innenoberfläche der Toilettenbasis (2) reichen.

5. Winkelstück (1) gemäß einem der vorhergehenden Ansprüche, bei dem die Hohlräume in einer 4 x 3 Matrix angeordnet sind.

6. Winkelstück (1) gemäß einem der Ansprüche 1 bis 4, bei dem die Hohlräume in einer 6 x 4 Matrix angeordnet sind.

7. Winkelstück (1) gemäß einem der Ansprüche 1 bis 4, bei dem die Hohlräume in drei Spalten angeordnet sind, von denen eine mittlere mit drei Löchern und auf beiden Seiten der mittleren zwei Spalten mit vier Löchern versehen sind.

8. Winkelstück (1) gemäß einem der vorhergehenden Ansprüche, bei dem das Teil (5) zum Fixieren der Innenoberfläche der Toilettenbasis (2) einen Winkel mit der Vertikalrichtung bildet, der zwischen 9° und 11 ° liegt.

9. Winkelstück (1) gemäß Anspruch 8, bei dem der Winkel 10° beträgt.

10. Winkelstück (1) gemäß einem der vorhergehenden Ansprüche, bei dem eine Verbindungsregion zwischen der Basis (4) zum Fixieren am Boden (3) und dem Teil (5) zum Fixieren der Innenoberfläche der Toilettenbasis (2) flexibel ist.

11. Winkelstück (1) gemäß Anspruch 10, bei dem die Verbindungsregion eine Ausnehmung ist, die im Wesentlich zylindrisch geformt ist.

## Revendications

1. Pièce angulaire (1) pour fixer des toilettes (2) au sol (3), comprenant une base (4) destinée à être fixée au sol (3) et une partie (5) pour fixer une surface interne de la base des toilettes (2) à la pièce angulaire (1), la partie (5) comportant une surface de fixation qui lors de l'utilisation met en contact la surface interne de la base des toilettes (2), la base (4) comprenant au moins un trou (6) pour le passage d'une vis de fixation, et la surface de fixation comprenant une pluralité de cavités (C) disposées en colonnes, ladite pluralité de cavités (C) étant disposée en colonnes côte à côte de telle sorte que les cavités (C) présentent une section transversale sur la surface de fixation avec des bords adjacents séparant les cavités (C) les unes des autres, **caractérisée en ce que** la section transversale diminue à mesure que les cavités (C) pénètrent dans la partie (5) dans la direction d'introduction d'une vis.

2. Pièce angulaire (1) selon la revendication 1, dans laquelle les cavités (C) sont des trous borgnes.

3. Pièce angulaire (1) selon une quelconque des revendications précédentes, dans laquelle la base (4) et la partie (5) sont des éléments solides formant une seule pièce (1).

4. Pièce angulaire (1) selon une quelconque des revendications précédentes, dans laquelle les cavités atteignent la moitié de l'épaisseur de la partie (5) pour fixer la surface interne de la base des toilettes (2).

5. Pièce angulaire (1) selon une quelconque des revendications précédentes, dans laquelle les cavités sont disposées en une matrice 4 X 3.

6. Pièce angulaire (1) selon une quelconque des revendications 1 à 4, dans laquelle les cavités sont disposées en une matrice 6 X 4.

7. Pièce angulaire (1) selon une quelconque des revendications 1 à 4, dans laquelle les cavités sont disposées en trois colonnes, l'une d'elles étant centrale et munie de trois trous et des deux côtés de la colonne centrale, deux colonnes avec quatre trous.

8. Pièce angulaire (1) selon une quelconque des revendications précédentes, dans laquelle la partie (5) destinée à fixer la surface interne de la base des toilettes (2) forme un angle avec la direction verticale comprise entre 9° et 11 °.

9. Pièce angulaire (1) selon la revendication 8, dans laquelle l'angle est de 10°.

10. Pièce angulaire (1) selon une quelconque des revendications précédentes, dans laquelle une région de jonction entre la base (4) destinée à être fixée au sol (3) et la partie (5) destinée à fixer la surface interne de la base des toilettes (2) est flexible.

11. Pièce angulaire (1) selon la revendication 10, dans laquelle ladite région de jonction est un renfoncement de forme substantiellement cylindrique.
